(19) **Europäisches Patentamt European Patent Office Office européen des brevets**

(11) **EP 4 390 454 A1**

(12) **EUROPEAN PATENT APPLICATION**

(43) Date of publication:
26.06.2024 Bulletin 2024/26

(21) Application number: 22214760.5

(22) Date of filing: 19.12.2022

(51) International Patent Classification (IPC):
*G01S 13/34* (2006.01)      *G01S 7/35* (2006.01)
*G01S 7/41* (2006.01)      *G01S 13/42* (2006.01)
*G01S 13/931* (2020.01)

(52) Cooperative Patent Classification (CPC):
G01S 13/42; G01S 7/0233; G01S 7/0234;
G01S 7/354; G01S 7/356; G01S 7/414;
G01S 13/343; G01S 13/931

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: **Provizio Limited**
**V94 VY47 Limerick (IE)**

(72) Inventors:
• **Christie, Steven**
  **Drumbo,, BT27 5TU (GB)**
• **Ludlow, Peter**
  **Lisburn, BT28 3RW (GB)**
• **Bratic, Predrag**
  **Novi Beograd (RS)**

(74) Representative: **Purdylucey Intellectual Property**
**6-7 Harcourt Terrace**
**D02 FH73 Dublin 2 (IE)**

(54) **SLOW PHASE-TIME DIVISION MULTIPLE ACCESS (SP-TDMA) MODULATION SCHEME IN A MIMO RADAR**

(57)      Disclosed is a millimetre wave automotive radar, that includes a plurality of millimetre wave transmitters, that are configured to transmit phase coded signals simultaneously according to a phase modulation scheme, and a plurality of sub-arrays operably coupled to respective plurality of millimetre wave transmitters, wherein each sub-array includes a predefined number of transmitter elements that are configured to transmit a phase coded signal received from respective millimetre wave transmitter on separate, mutually orthogonal time slots from the other sub-arrays, using time division multiplexing.

FIG.11A

**Description**

**Field**

The present disclosure relates to radar systems, and more specifically to a (SP-TDMA) transmit modulation scheme in a MIMO radar.

**Background of Invention**

It is widely known to those related to the field that the Multiple Input Multiple Output (MIMO) technique, which comprises of measuring the magnitude and phase of the signal received at N receivers (multiple outputs) for each of M transmitters (multiple inputs), can be used to form a 'virtual' receive array that is larger than the physical receive array and thereby enable improved object angular resolution. Various modulation schemes for MIMO exist which aim to achieve orthogonality between the signals transmitted by each individual transmitter, such that they can be separated out on the receiver side in order to form the virtual array. These include but are not limited to Time Division Multiplexing (TDM), Frequency Division Duplex (FDD), Doppler Division Multiple Access (DDMA) and Binary Phase Modulation (BPM). For TDM MIMO, the transmitters sequentially transmit a signal one at a time, with each receive element receiving signals originating from each of the transmitters sequentially in time, and these can thereby be separated according to which transmitter the signal originated from. When the spacing between said transmit and receive elements is set accordingly, the signals at each receiver can be rearranged corresponding to the transmitter from which they originated, and the phase differences on each received radiated wave is such that an equivalent larger number of receive elements appear than are actually present and thus 'virtual' elements are created.

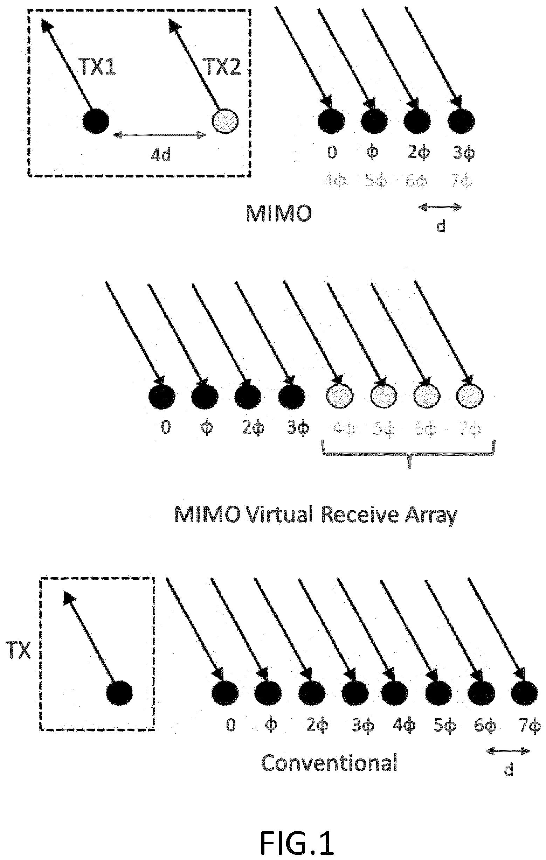

FIG.1 illustrates a MIMO virtual array which consists of (M × N) number of elements, whilst only making use of (M + N) physical antenna elements, and which is much larger than the physical number of transmitters and receivers required. Therefore, the angular resolution of the virtual array is much finer than that of the physical array when not used in a MIMO implementation.

With further reference to Figure 1, the first transmitter, TX1, transmits a signal, via an antenna with a wide antenna radiation pattern, which impinges upon, and is reflected by an object at angle $\theta$ and the reflected wavefront across the four receivers is subject to a progressive phase delay between elements of $\Delta\phi = (2\pi/\lambda)*d*\sin(\theta)$ radians where $\lambda$ is the wavelength of the transmitted frequency and d is the distance between the receive antennas. Similarly, when the second transmitter, TX2, transmits a signal, a similar progressive phase delay between elements will result. However, due to the spacing between elements TX1 and TX2, an additional progressive phase will be added to these phase terms of $(2\pi/\lambda)*4d*\sin(\theta)$ radians, where 4d is the separation distance between the TX1 and TX2 transmit antennas. By separating the signals across the receive array (and writing in terms of $\Delta\phi$) the relative phases therefore become

$$\{0, \Delta\phi, 2\Delta\phi, 3\Delta\phi, 4\Delta\phi, 5\Delta\phi, 6\Delta\phi, 7\Delta\phi\}$$

which is seen to be equivalent to the conventional case. Such is the popularity of these systems that several automotive millimetre wave (76 - 81 GHz) radar transceiver chips, suitable for MIMO, are currently on the market with each having various numbers of transmit and receive channels, which can be further increased by using multiple chips in cascade.

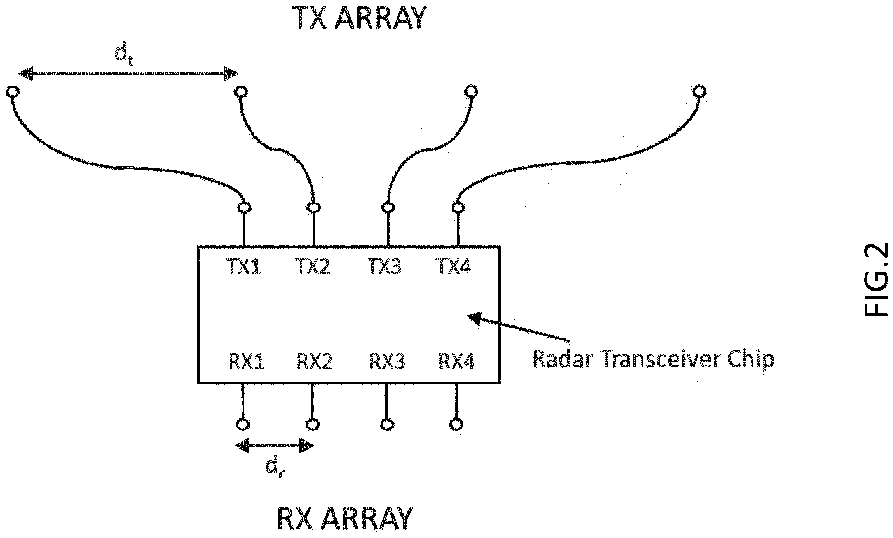

FIG.2 illustrates conventional MIMO radars, where 4x transmitters are offset by a distance dt and 4x receivers are offset by a distance $d_r$. In such MIMO radars it is common to use FMCW (Frequency Modulated Continuous Wave) modulation, which again is a common type of modulation and would be known to those familiar with the field. A FMCW waveform, also referred to as a chirp, is a sinusoidal waveform whose frequency varies with time. FMCW radars transmit chirps in a periodic fashion, at a period referred to as the pulse repetition interval (PRI) and most commonly in a sawtooth configuration (typically increasing linearly with time), although other chirp types are available. The resulting target echo from a single object in the scene would contain a delayed and attenuated copy of the transmitted chirp. By mixing the received signal with the transmitted chirp a complex sinusoidal waveform results. This waveform is known as the beat signal and its frequency is directly proportional to the distance to the detected object.

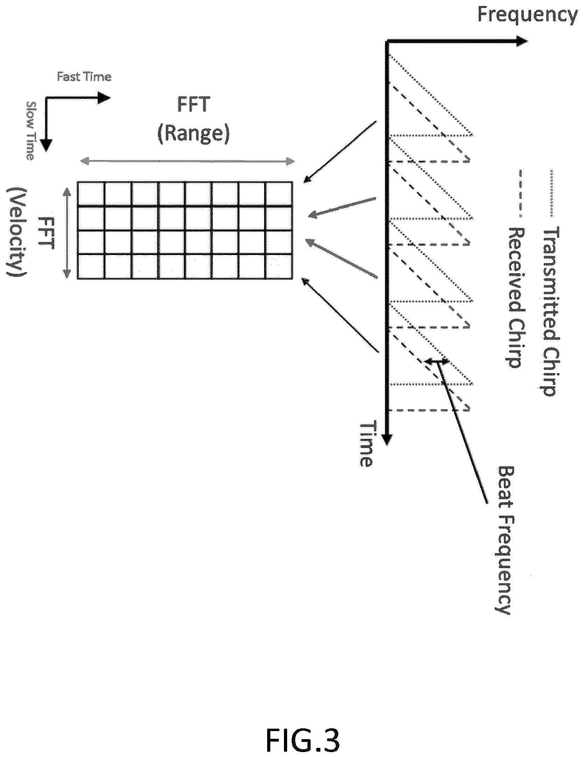

FIG. 3 illustrates multiple chirps collected within a single 'frame', which thereby allows determination of doppler frequency changes in the 'slow time' dimension. When multiple objects are in the scene, they give rise to a signal from the mixer which consists of the sum of multiple sinusoids of varying amplitudes, phases and frequencies coming from these objects, and the ranges of the multiple objects can be obtained from the spectrum of frequencies being output from the mixer. The estimation of the beat frequency is usually implemented in the digital domain, after the beat signal has been digitally sampled. Since the beat frequency is much smaller than the radar bandwidth, a low-speed analogue-to-digital converter (ADC) can be used. By sampling the beat signal and placing the samples for each chirp into separate columns of a matrix, the row indices of the matrix would correspond to the 'fast' time taken across a single chirp and the column indices would correspond to the 'slow' time taken across multiple chirps. By employing a Fast Fourier Transform (FFT) to calculate the Discrete Fourier Transform (DFT) of each column of the matrix, the range of any objects in the radar field of view is calculated through determination of their beat frequencies, and by applying a further FFT along the rows of the matrix the velocity of the objects can be calculated through detection of the doppler frequency. The use of these two FFTs is commonly named a 2D FFT (also known as the range-Doppler FFT) and allows objects to be determined in both range and velocity. A concomitant benefit of performing the 2D FFT is that it lowers the noise floor through matched filtering of the object's beat and doppler frequencies. Evidently, the number of objects that fall into the same range-velocity bin would typically be small in number, depending on the range and velocity resolution of the radar.

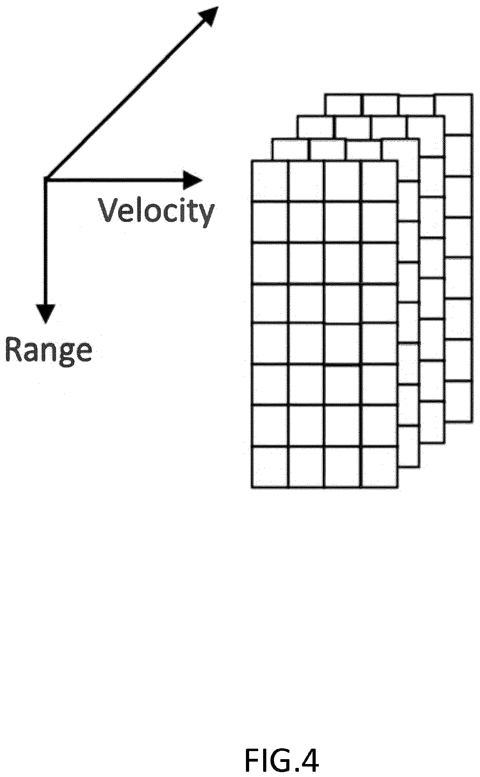

FIG. 4 illustrates a range-velocity plot which gives a lot of useful information, but lacks detail on object angular position. The angular position is determined by taking the range-doppler bin from the 2D FFT output for each receive channel (including those both real and virtual by TDM) and performing a 3rd 'angle' FFT or 3D FFT across the 2D FFT outputs for each receiver. Note that this typically occurs following on from the Constant False Alarm Rate (CFAR) thresholding step, whereby only bins with a signal-to-noise ratio that exceeds a certain threshold are retained. The velocity of the object can be determined from the doppler frequency shift of the detected signal. The doppler effect is the well-known change in frequency of a wave in relation to the relative change in movement between a source and an observation point and appears on the detected radar beat signal if the object is moving with respect to the radar. The beat signal is digitized into discrete range-bins, and due to the very short time duration of the chirps, the changes in IF frequency are too small to shift the beat signal for an object into another range bin across consecutive chirps. However, by comparing the phases of sinusoidal frequency components across consecutive chirps, the velocity of the object can be estimated. The phase delay of a signal reflected from a target at a distance R is given by:

$$\varphi = 2\left(\frac{2\pi}{\lambda}R\right)\ radians$$

For a moving object, the phase would change by $\Delta\varphi$ across consecutive chirps, corresponding to a change in the distance, $\Delta R$:

$$\Delta\varphi = 2\left(\frac{2\pi}{\lambda}\Delta R\right) = \frac{4\pi}{\lambda}v_{rel}T_c\ radians$$

Where $v_{rel}$ is the radial velocity of the object, relative to the radar, and $T_c$ is the repetition period between consecutive transmitted chirps (i.e. the PRI). The Doppler phase is calculated across the frame by performing the second FFT. 'Unambiguous' velocity measurements can only be made for values of $-v_{max} < v_{rel} < +v_{max}$, corresponding to Doppler phase shifts of $-180° < \Delta\varphi < +180°$. At velocities beyond this, the phase wraps around and the magnitude of the velocity appears to be lower than it really is. Therefore, the maximum velocity of a target which can be detected by the radar, without phase ambiguity, is given by:

$$v_{max} = \frac{\lambda}{4T_c}$$

Where $\lambda$ is the wavelength of the radar RF front-end signals, and $T_c$ is the time between consecutive chirps in the sequence.

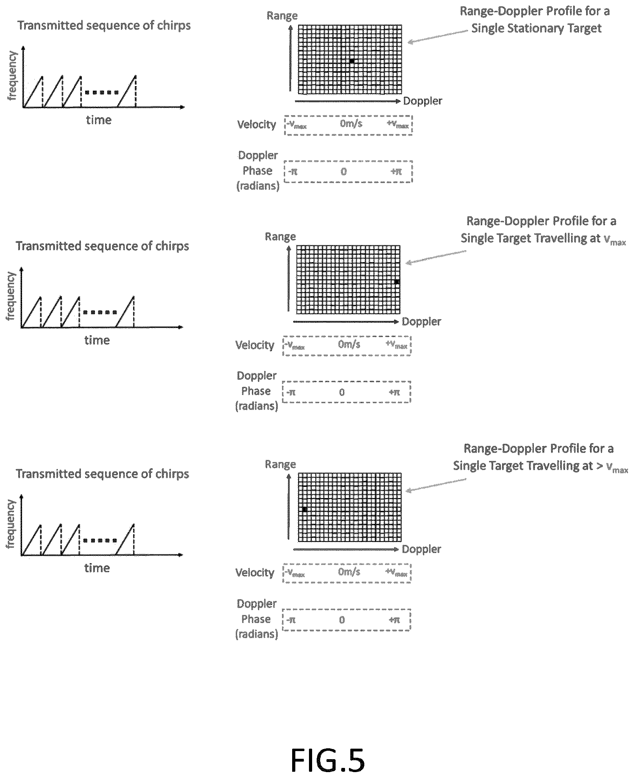

FIG. 5 shows examples of the range-Doppler profile for targets at velocities of 0 ms$^{-1}$, $v_{max}$, and for a velocity that is greater than $v_{max}$, where the Doppler phase increases to $> \pi$, and 'wraps around' to appear in the Doppler bins which correspond to negative velocities. This shows the effect of having an 'ambiguous' phase, where in the case of the last plot, the decoded velocity calculation will be wrong unless the phase wrap is known.

Although there are methods to expand the angular resolution of radar systems further such as using sparse arrays etc., it is well known that angular resolution is proportional to the number of channels available (or virtual channels in a MIMO radar). This means that when using current approaches, more radar transceiver chips are required which would be more expensive and therefore prohibitive for automotive/volume applications that require low cost.

In view of the above, there is a need for a MIMO configuration that has an increased radar range, increased maximum unambiguous doppler velocity, and improved angular resolution, without increasing the number of radar transceiver chips.

## SUMMARY OF INVENTION

The present invention relates to a MIMO radar.

In an aspect, there is provide a millimetre wave digital automotive radar that comprises a plurality of millimetre wave transmitters, that are configured to transmit phase coded signals simultaneously according to a phase modulation scheme, and a plurality of antenna sub-arrays operably coupled to a plurality of millimetre wave transmitters, wherein each antenna sub-array includes a number of antenna elements identical to a number of millimetre wave transmitters, and wherein each antenna sub-array is configured to transmit phase coded signals received from respective millimetre wave transmitters on separate, mutually orthogonal time slots from the other antenna sub-arrays, using time division multiplexing; and a plurality of millimetre wave receivers coupled to antennas, wherein, the millimetre wave receivers receive the reflected phase coded signal from objects at a distance from the radar according to the TDMA modulation scheme.

In an embodiment of the present invention, the plurality of antenna sub-arrays transmit phase coded signals received from respective millimetre wave transmitters through at least one transmitter element during each orthogonal time slot, such that the antenna elements of the plurality of sub-arrays that transmit simultaneously during a first instance of time continue to transmit simultaneously over different subsequent instances of time using different slow phase codes according to a pre-defined scheme.

In an embodiment of the present invention, the plurality of millimetre wave transmitters is implemented through a plurality of transmit channels of at least one transceiver chip.

In an embodiment of the present invention, the plurality of antenna sub-arrays is connected to the plurality of millimetre wave transmitters through respective plurality of single input multi-output millimetre-wave switches, and wherein an input of each switch is connected to a respective millimetre wave transmitter, and a plurality of outputs of each switch are connected to antennas of different antenna sub-arrays.

In an embodiment of the present invention, a number of antenna sub-arrays is identical to the number of outputs of each switch and a number of antenna elements in each sub-array is identical to a number of millimetre wave transmitters.

In an embodiment of the present invention, when the number of switches is four and number of throw positions in each switch is three, then first throw positions of each switch are connected to respective antennas of first sub-array, second throw positions of each switch are connected to respective antennas of second sub-array and third throw positions of each switch are connected to respective antennas of the third sub-array, and wherein identical throw positions of each switch are activated simultaneously to enable simultaneous transmission from antennas of respective antenna sub-array.

In an embodiment of the present invention, the throw positions of each switch are activated in a predefined common sequence to enable transmission of phase coded signals from respective transmitter on mutually orthogonal time slots according to the TDMA modulation scheme.

In an embodiment of the present invention, the antenna elements of either the millimetre wave transmitter, or millimetre wave receiver, or both are arranged with non-equal spacings.

In an embodiment of the present invention, the phase modulation is selected from one of: DDMA and BPM.

In an embodiment of the present invention, the radar further comprises a plurality of millimetre wave transceivers for receiving and demodulating the phase coded signals transmitted by the plurality of millimetre wave transmitters based on a circular sum approach to identify a millimetre wave transmitter of each received signal, and then identifying a transmit antenna element of said millimetre wave transmitter based on a time of arrival of the demodulated signal.

In an embodiment of the present invention, the radar further comprises another plurality of antenna sub-arrays coupled to respective plurality of millimetre wave receivers that receive uncoded, reflected signals and are configured to apply phase codes to these received signals simultaneously according to a phase modulation scheme, wherein the phase codes are on separate, mutually orthogonal time slots from the other sub-arrays, using time division multiplexing, and wherein the number of millimetre wave receivers is identical to the number of antenna elements in each antenna sub-array.

In another aspect of the present invention, there is provided a method of operating a millimetre wave automotive radar. The method includes enabling a plurality of millimetre wave transmitters to transmit phase coded signals simultaneously according to a phase modulation scheme, operably coupling a plurality of sub-arrays to respective plurality of millimetre wave transmitters, wherein each sub-array includes a predefined number of transmitter elements, and enabling the transmitter elements of each sub-array to transmit a phase coded signal received from respective millimetre wave transmitters on separate, mutually orthogonal time slots from the other sub-arrays, using time division multiplexing.

Various embodiments of the present invention disclose a MIMO radar that utilises RF switches in conjunction with MIMO radar transceiver chips, to increase the number of transmit channels available for a given number of MIMO radar transceiver chips, and in this way a higher angular resolution can be achieved without greatly increasing the cost of the radar system, as the cost of a switch is much less than the cost of a radar transceiver chip. By transmitting on numerous channels simultaneously the effect of the loss due to switches is removed. By incorporating TDMA encoding, along with DDMA (to form a type of SP-TDMA), the signals from each transmitter and switch throw position can be determined and the virtual array formed. The use of RF switches, with a pole to throw ratio of 1 : S, in conjunction with a MIMO radar transceiver chip, or chips, with a total of M transmit and N receive channels on chip to form a SP-TDMA MIMO, increases the number of MIMO transmit channels and antennas to (S × M), which improves the angular resolution compared with an equivalent TDM/BPM/DDMA radar using a radar transceiver chip, or chips, with an equivalent number of M transmit and N receive channels (assuming the same array topology, for example, if both MIMO arrays are 'filled' uniform linear arrays, or both are the same type of sparse array, etc.).

This also increases the radar range compared to a MIMO radar system, with an equivalent radar transceiver chip, or chips, having the same number of M transmit and N receive channels, but no switches. Further, the disclosure will increase the radar's maximum unambiguous doppler velocity compared with this TDM MIMO radar system, provided that S < M.

The radar's maximum unambiguous doppler velocity will also be increased when compared with a TDM MIMO radar system that uses the same radar transceiver chip(s) and switches (or equivalent combinations), to achieve the same number of (S × M) MIMO physical transmit channels and N MIMO physical receive channels. Further, it reduces the likelihood of multiple targets at same range and different velocities from obscuring each other, compared with a DDMA MIMO radar system that uses an equivalent number of (S × M) transmit and N receive channels.

There is also provided a computer program comprising program instructions for causing a computer program to carry out the above method which may be embodied on a record medium, carrier signal or read-only memory.

## BRIEF DESCRIPTION OF DRAWINGS

The present invention will be more clearly understood from the following description of embodiments thereof, given by way of example only, with reference to the accompanying drawings, in which:-

FIG. 1 shows a conventional 8 receive element antenna configuration and an equivalent MIMO configuration;
FIG. 2 shows an example single chip radar system, for MIMO, with 4 transmit channels and 4 receive channels;
FIG. 3 shows an example of a commonly used type of FMCW radar chirps and the resulting range and velocity determinations performed using a 2D FFT;
FIG. 4 shows a further FFT on the 2D FFT for each receiver, across all the receivers, to calculate angle;
FIG. 5 shows an example of an FMCW transmit sequence and the range-doppler profile for a single stationary object, an object travelling at $v_{max}$, and an object travelling at a velocity that is greater than $v_{max}$, but less than 2 times the value of $v_{max}$,
FIG. 6 shows an example of a Time Division Multiple Access (TDMA) FMCW Modulation Scheme;
FIG. 7 shows an example of a DDMA modulation scheme using three transmitters;
FIG. 8 shows an example of Empty Sub-band Based DDMA with $N_{TX} = 4$ and $N_{sub} = 6$;
FIG. 9 shows one possible type of DSP Chain for empty Sub-Band Based DDMA;
FIG.10 illustrates a new scheme known as Slow Phase-Time Division Multiple Access (SP-TDMA) scheme, by combining the TDMA and DDMA, in accordance with an embodiment of the present invention;
FIGs.11A and 11B gives an example block diagram for a MIMO radar system employing a SP-TDMA scheme using a single radar transceiver chip with 4 × TX channels, 4 × RX channels, and 4 × SP3T Switches to increase the number of transmit antennas in MIMO to 12, over three time slots, in accordance with an embodiment of the present invention;
FIG.11C gives a detailed example block diagram of an exemplary MIMO radar system in which a SP-TDMA scheme is implemented at the receiver, in accordance with an embodiment of the present invention;
FIG.12 shows an example of a SP-TDMA transmit modulation scheme using DDMA phase coding with 4 transmitters and 4 Single Pole Three Throw Switches (throws labelled A, B, C);
FIG.13 shows a phasor diagram representation of three potential unambiguous phase values for ambiguous phase measurement of $\varphi_{v\_neas}$, with; no phase wrap ($\varphi_{v1}$); +2π radians phase wrap ($\varphi_{v2}$); -2π radians phase wrap ($\varphi_{v3}$);
FIG.14 shows the example of a wavefront arriving at a sub-section of the virtual array (sub-array corresponding to TX1 only) for the system of FIG. 11;
FIG.15 shows the three azimuth angle FFT outputs from the coherent peak method for a target travelling at $< -v_{max}$ at angle of -30° azimuth in the system of FIG. 11;
FIG. 16 shows the embodiment of the SP-TDMA (with DDMA phase coding) radar DSP chain used in the current invention;
FIG. 17 shows a second embodiment of the SP-TDMA (with DDMA phase coding) radar DSP chain where the CFAR is performed earlier in the DSP chain to reduce processing requirements for demodulation, angular and velocity processing; and
FIG. 18 shows a third embodiment of the SP-TDMA (with DDMA phase coding) radar DSP chain using the Chinese Remainder Theorem.

**DETAILED DESCRIPTION OF THE DRAWINGS**

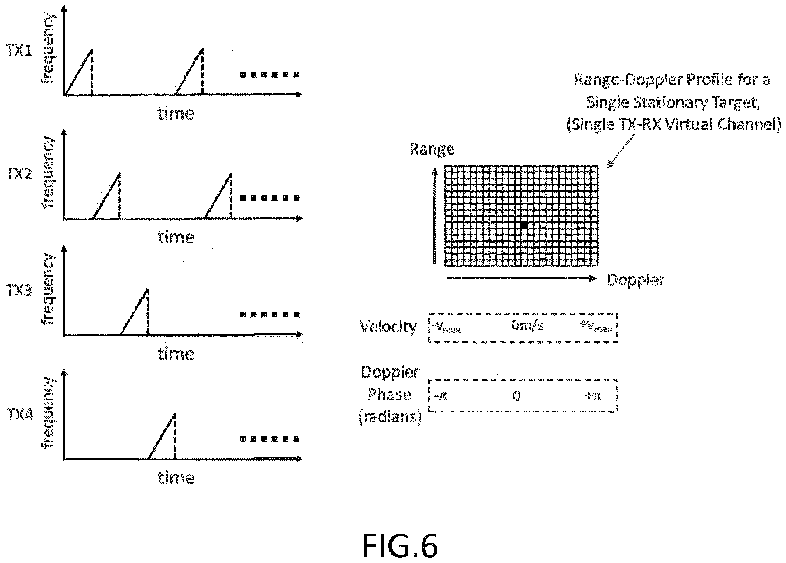

FIG. 6 shows an example of a Time Division Multiple Access (TDMA) FMCW Modulation Scheme. In the TDM modulation scheme, where the multiplexed signals come from different transmitters, each transmitter is transmitted on separate time slots, meaning that the digitised received signals which correspond to each transmitter can be easily separated in time without any more complex demultiplexing scheme being applied, allowing the virtual array to be constructed from the signals received on each time slot. However, this comes at the cost of maximum unambiguous velocity, because the number of time slots is equal to the number of transmitters, $N_{TX}$, which increases the chirp repetition period on each transmit channel, and reduces the maximum detectable velocity to:

$$v_{max} = \frac{\lambda}{4N_{TX}T_c}$$

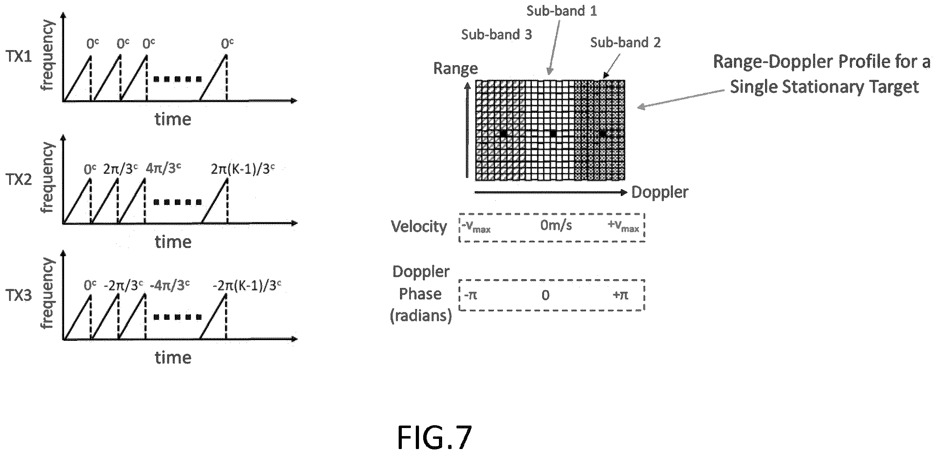

FIG. 7 shows an example of a DDMA modulation scheme using three transmitters. In the case of DDMA MIMO, each TX channel transmits simultaneously, giving a $10*\log_{10}(N_{TX})$ dB increase in transmit (TX) power, and thereby a $10*\log_{10}(N_{TX})$ dB increase in Effective Isotropic Radiated Power (EIRP), when compared to TDM modulation. In this scheme, orthogonality between TX channels is achieved by applying a unique cyclic phase code to each TX channel, using phase-shifters, where the phase of each chirp is sequentially varied. With the number of TX channels set to $N_{TX}$ and with K chirps per frame, the phase of the $k^{th}$ chirp on the $n_{TX}^{th}$ TX channel is given by:

$$\omega(n_{TX}, k) = \frac{2\pi(n_{TX} - 1)(k - 1)}{N_{TX}}$$

This is shown for a $N_{TX}$ = 3 TX channels (note that the phases have been wrapped here, or reconstructed to a signal's minimum phase, i.e., within $\pm\pi$ radians). Three sub-bands are highlighted in different patterns on the range-Doppler profile which is the Doppler profile at a specific range or more specifically for a specific range bin. The target appears in sub-bin 5 of each sub-band.

By using the DDMA modulation scheme, a single target would give $N_{TX}$ = 3 separate peaks along the Doppler dimension, due to the slow time phase coding of the chirps, with each peak corresponding to one of the Nt transmitters. The Doppler dimension represents Doppler phase, and the Doppler peak corresponding to TX1 (phase coded with 0 radians across all K chirps) represents the true velocity of the target, whilst the peaks corresponding to TX2 and TX3 are phase shifted by $2\pi/3$ radians and $-2\pi/3$ radians respectively, which are the phase shift increments of the DDMA code applied to those channels. The Doppler domain is effectively split into $N_{TX}$ sub-bands each of size $K/N_{TX}$, with the signal in each Doppler bin repeating every $K/N_{TX}$ bins. The $K/N_{TX}$ bins in each sub-band are referred to as sub-bins, for example each of the $N_{TX}$ sub-bands has sub-bins numbered from 1 up to $K/N_{TX}$. This leads to different issues, firstly that the Doppler peak which corresponds to the true velocity of the target is the one which corresponds to TX1, and which has 0 radians phase coding. In this instance the Doppler peaks are local maxima of all the doppler phases for a specific range bin in the doppler FFT output. However, which Doppler peak this is, is unknown without further processing (where methods such as Chinese Remainder Theorem (CRT) can be applied). Moreover, if multiple targets are present at the same range, but at different velocities, there is a possibility of them appearing in the same range-Doppler sub-bin.

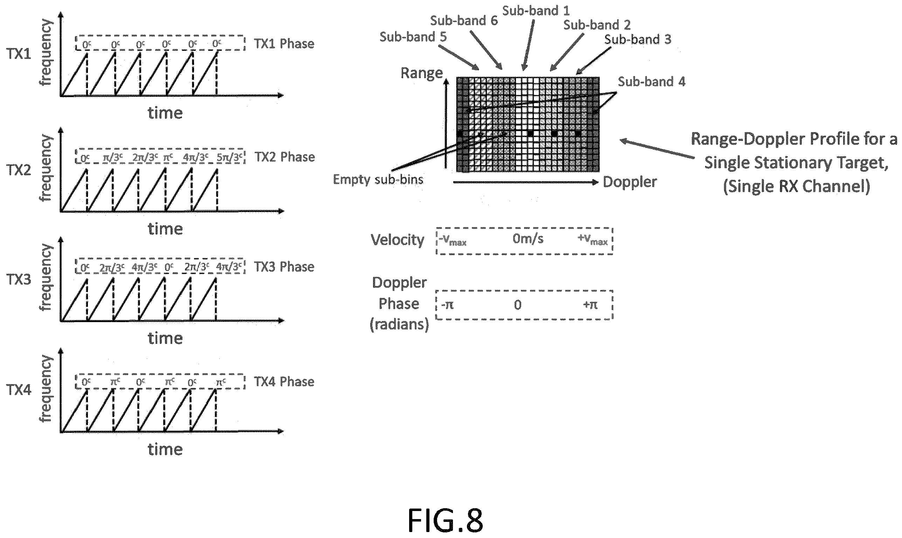

FIG. 8 shows an example of Empty Sub-band Based DDMA with $N_{TX}$ = 4 and $N_{sub}$ = 6 to recover the unambiguous velocity, and to map the doppler bins to the correct TX channel. The radar applies a phase code to the $k^{th}$ chirp on the $n_{TX}^{th}$ TX channel of:

$$\omega(n_{TX}, k) = \frac{2\pi(n_{TX} - 1)(k - 1)}{N_{sub}}$$

By increasing the divisor $N_{TX}$ to $N_{sub}$, $(N_{sub} - N_{TX})$, empty sub-bands are produced. A single target will produce $N_{TX}$ multiple distinct peaks in the Doppler dimension, spaced apart by phases of $2-\pi/N_{sub}$ radians. In order for this approach to work, the total number of chirps per frame, or doppler bins, K, must be divisible by the number of doppler sub-bands used, $N_{sub}$ (in this case 6), in order to produce an integer number of bins in each sub-band.

Using the example of FIG. 8, which has K = 24, $N_{TX}$ = 4, and $N_{sub}$ = 6, each Doppler sub-band has $K/N_{sub}$ = 4 Doppler sub-bins, and for example, sub-bin 3 of sub-band 2 would correspond to bin 17 of the doppler spectrum. In this case, a target return gives rise to 4 distinct peaks in the same sub-bin of the neighbouring sub-bands in the doppler spectrum, with each peak corresponding to a single TX channel, and the same sub-bins in the two remaining sub-bands are empty. This will result in $N_{sub}$ different hypotheses of the below form, for the $i^{th}$ range-bin and the $j^{th}$ Doppler sub-bin, which can be solved to find which sub-bins contain detections and which are empty:

$$h_1(i,j) = S_1(i,j) + S_2(i,j) + \dots + S_{Nt}(i,j)$$

$$h_2(i,j) = S_2(i,j) + S_3(i,j) + \dots + S_{Nt+1}(i,j$$

$$\dots$$

$$h_{Nsub}(i,j) = S_{Nsub}(i,j) + S_1(i,j) + \dots + S_{Nt-1}$$

Where $S_{nsub}(i, j)$ is the signal in the $i^{th}$ range-bin and $j^{th}$ Doppler sub-bin in sub-band $n_{sub}$. In order to find the correct hypothesis, a circular sum is carried out, where the range-doppler sub-bins for each sub-band are added, with the summed hypothesis that gives the largest value indicating the correct hypothesis. This in turn allows the $N_{TX}$ doppler peaks to each be mapped to their corresponding TX channel. The doppler bin corresponding to the correct velocity is given by the Doppler bin corresponding to TX1, because it has no Doppler phase coding applied.
With reference to FIG. 8, where $N_{TX} = 4$, $N_{sub} = 6$, there are 6 hypotheses to test for each $i^{th}$ range, $j^{th}$ Doppler sub-bin:

$$h_1(i,j) = S_1(i,j) + S_2(i,j) + S_3(i,j) + S_4(i,j)$$

$$h_2(i,j) = S_2(i,j) + S_3(i,j) + S_4(i,j) + S_5(i,j)$$

$$h_3(i,j) = S_3(i,j) + S_4(i,j) + S_5(i,j) + S_6(i,j)$$

$$h_4(i,j) = S_4(i,j) + S_5(i,j) + S_6(i,j) + S_1(i,j)$$

$$h_5(i,j) = S_5(i,j) + S_6(i,j) + S_1(i,j) + S_2(i,j)$$

$$h_6(i,j) = S_6(i,j) + S_1(i,j) + S_2(i,j) + S_3(i,j)$$

Here, the static target appears in Doppler sub-bin 3 of sub-bands 1, 2, 3 and 4. Assuming the magnitude of the Doppler peaks to be 1, this results in values for the hypotheses of:

$$h_1 = 1 + 1 + 1 + 1 = 4$$

$$h_2 = 1 + 1 + 1 + 0 = 3$$

$$h_3 = 1 + 1 + 0 + 0 = 2$$

$$h_4 = 1 + 0 + 0 + 0 = 1$$

$$h_5 = 0 + 0 + 1 + 1 = 2$$

$$h_6 = 0 + 1 + 1 + 1 = 3$$

Hypothesis 1 produces the largest sum value, and so is chosen as the correct answer. Doppler sub-band 1, sub-bin 3 is therefore mapped to TX1, Doppler sub-band 2, sub-bin 3 is mapped to TX2, and Doppler sub-band 3, sub-bin 3 is mapped to TX3, and Doppler sub-band 4, sub-bin 3 is mapped to TX4. The demodulation of the DDMA sub-bands is enabled after TX1 is mapped as the slow-time phase coding added to TX2, TX3 and TX4 is known.

One additional advantage of empty sub-band based DDMA over TDM is that the maximum unambiguous velocity after the DDMA demodulation step is equal to $v_{max} = \frac{\lambda}{4T_c}$, with no reduction by a factor of $\frac{1}{N_{TX}}$, as is the case in TDM MIMO.

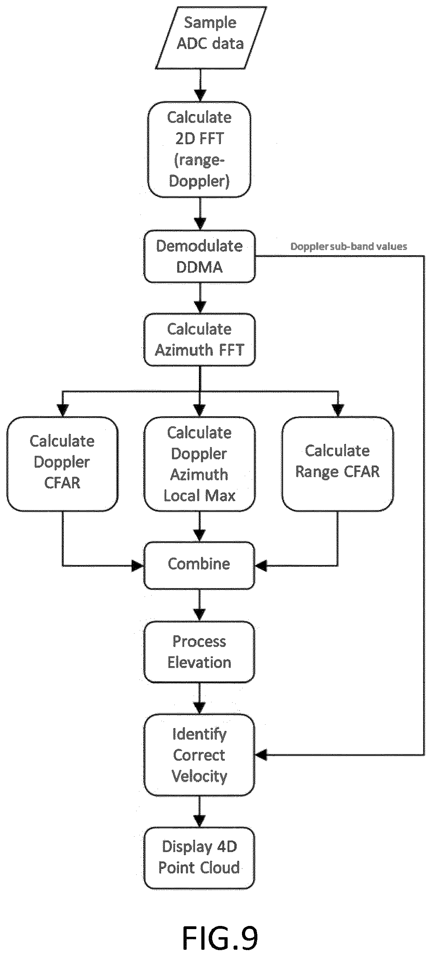

FIG. 9 shows one possible type of DSP Chain for empty Sub-Band Based DDMA. Here, the 2D FFT is performed on data from each receive channel, giving a set of $N_{RX}$ range-Doppler profiles. The DDMA demodulation is then performed, to map each range-Doppler sub-bin to its corresponding TX channel and to recover the true velocity for that range-Doppler sub-bin. Following this, angle processing can be carried out before the Constant False Alarm Rate (CFAR) thresholding is calculated, and local maximum algorithms can be run to determine which range-Doppler-angle bins contain target detections. When further angle processing is performed, the 4D point cloud (which shows the 3D position along with the velocity for all targets detected in the frame) can be calculated and displayed. It will be recognised by those familiar in the field that the order in which the CFAR and angle processing is carried out is not fixed in this way and it may be more efficient in terms of processing time or preference to carry out the CFAR detection step prior to the DDMA demodulation and/or angle processing steps.

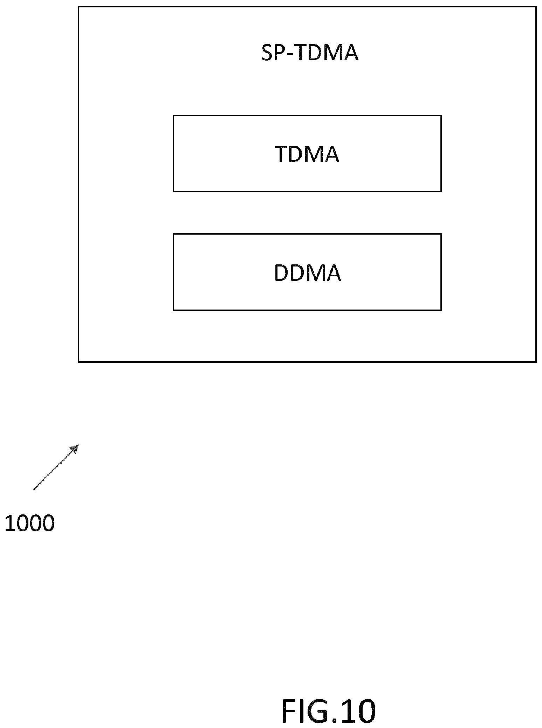

FIG.10 illustrates a new scheme known as Slow Phase-Time Division Multiple Access (SP-TDMA) scheme 1000, by combining the TDMA and DDMA modulation schemes, in accordance with an embodiment of the present invention. The SP-TDMA scheme 1000 is a hybrid modulation scheme in which multiple transmitters are split into smaller sub-arrays of multiple transmitter elements, with each sub-array allocated time slots, and with the transmitter elements of each sub-array transmitting simultaneously on its allocated time slot. The sub-arrays transmit phase coded signals received from respective millimetre wave transmitters simultaneously through at least one transmitter element during each instance of time, such that the transmitter elements of the plurality of sub-arrays that transmit simultaneously during a first instance of time continue to transmit simultaneously over different subsequent instances of time. By simultaneously transmitting on the multiple channels of a sub-array, the transmit Equivalent, Isotropically Radiated Power (EIRP) of the system is increased through wave coherence, and the maximum range over which the radar can detect targets is increased. By applying phase coding across the elements of each sub-array such that they are mutually orthogonal (in a manner similar to DDMA), the signals corresponding to each TX channel can be separated using Digital Signal Processing (DSP) techniques to construct the MIMO virtual array. In this way, orthogonality is achieved using a combination of phase coding and TDMA. The phase modulation scheme outlined here combines the phase coding used for Doppler Division Multiple Access (DDMA) with the time slot method used in TDMA, but it should be appreciated that other phase modulation schemes, such as Binary Phase Modulation (BPM) could also be used. The BPM may be easier to implement but may be more difficult to demodulate, and may require velocity extension methods such as CRT to be implemented. Other variations on the time slot allocation, e.g., multiplexing sequentially through the time slots or using a non-sequential sequence with the order of chirps varied to facilitate alternative Doppler extension methods, can also be implemented.

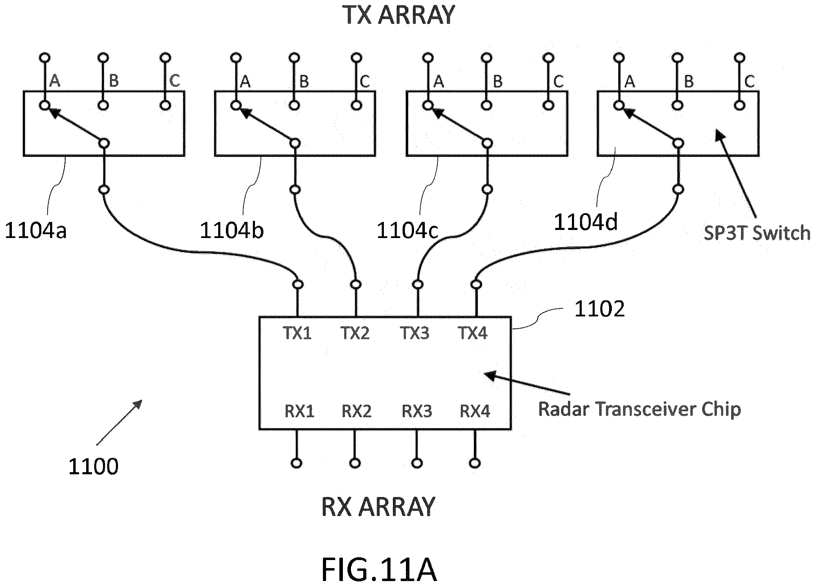

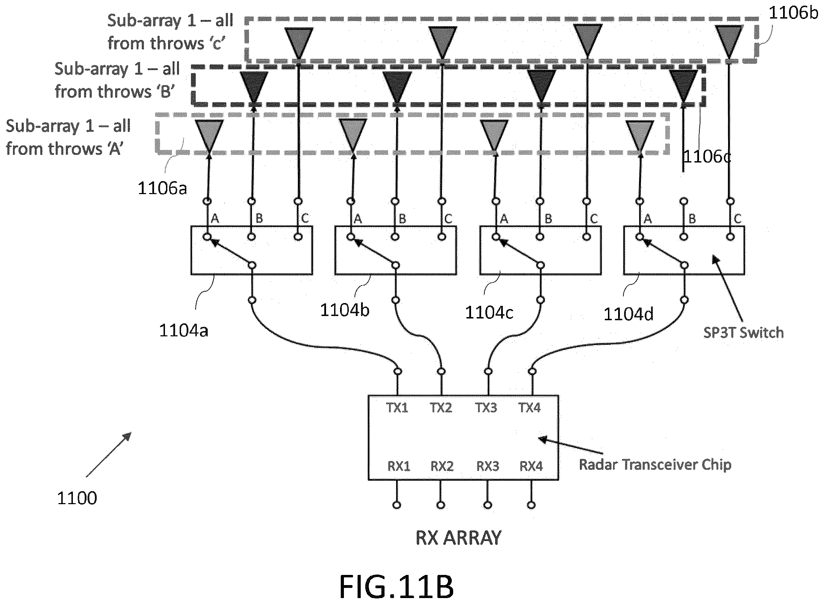

FIGs.11A and 11B illustrate an exemplary MIMO radar system 1100 that implements the SP-TDMA scheme at the transmission end, in accordance with an embodiment of the present invention. The MIMO radar system 1100 may be a millimetre wave automotive radar that may be designed for use in automotive 4D radar imaging systems. Also, the MIMO radar system 1100 can be used in any radar system such as defence or warfare but is more specifically applicable for automotive applications.

The MIMO radar system 1100 includes a single radar transceiver chip 1102, having four receive channels, and four transmit channels. Each transmit channel may also be referred to as a millimetre wave transmitter, and each receive channel may be referred as a millimetre wave receiver. The four transmit channels TX1, TX2, TX3 and TX4 are connected to inputs of first, second, third and fourth Single Pole 3 Throw (SP3T) switches 1104a, 1104b, 1104c and 1104d (throws labelled A, B, C). Thus, the number of switches 1104a, 1104b, 1104c and 1104d are identical to the number of transmit channels on the radar transceiver chip 1102.

Referring to FIG. 11B, the first, second and third antenna sub-arrays 1106a, 1106b and 1106c are connected to the transmit channels TX1, TX2, TX3 and TX4 through the switches 1104a, 1104b, 1104c and 1104d respectively. Each antenna sub-array includes a number of antenna elements identical to the number of transmit channels, and the number of antenna sub-arrays is identical to number of outputs of the switch. In an embodiment of the present invention, the antenna elements of a given antenna sub-array are configured to transmit simultaneously.

Thus, when the number of outputs of each switch is 3, then a total 3 antenna sub-arrays are used. Also, when the number of transmit channels is 4, the total number of antennas in each sub-array is 4.

In an embodiment of the present invention, at any time, the outputs/throw positions of a switch are connected to antenna elements of different sub-arrays 1106a, 1106b, and 1106c. For example, throw positions A of the switches 1104a till 1104d are connected to the antennas of the first sub-array 1106a, throw positions B of the switches 1104a till 1104d are connected to the antennas of the second sub-array 1106b and throw positions C of the switches 1104a till 1104d are connected to the antennas of the third sub-array 1106c.

Thus, the four transmit channels TX1, TX2, TX3 and TX4 transmit simultaneously with phase-coding applied. All transmitters are powered on simultaneously, and transmit during the first chirp. All linked switches throw positions are activated on each transmit channel at the same time. All switches throw positions are moved to the next position at the same time while keeping the same DDMA encoding on each. The steps are repeated until all throw positions on the switches have been completed. The entire process is continuously repeated during operation. The throw positions of each switch are activated in a predefined common sequence to enable transmission of phase coded signals from respective transmitter according to the TDMA modulation scheme.

In an example, all A positions of the three switches are activated simultaneously to enable the antennas of first antenna sub-array 1106a to transmit at the same time, all B positions are activated to transmit at the same time, enabling the antennas of the second antenna sub-array 1106b to transmit at the same time, and so on. Thus, the four transmit channels transmit according to DDMA modulation scheme, and three switches A, B and C of each transmit channel transmit according to TDMA modulation scheme. It will be appreciated by those familiar in the field that the switches in the above example could be added alternatively to the receive channels, or both transmit and receive channels.

It will be appreciated by those familiar to the field that the SP-TDMA scheme may be applied to similar systems with different numbers of transmit and receive channels (such as a 2-radar transceiver chip system) or with different switch configurations, for instance SP2T or SP4T etc. In the MIMO radar configuration 1100, by switching between the three outputs of the SP3T switches, the number of transmit channels can be increased from the four chip transmit outputs, to twelve. In a practical sense, such an arrangement could be used to extend the system from a $4 \times$ TX channel, $4 \times$ RX channel system using TDM modulation (using only the radar transceiver chip) to a larger $12 \times$ TX channel, $4 \times$ RX channel system using TDM modulation (using the radar transceiver chip and SP3T switches). However, this would increase the number of unambiguous velocity hypotheses required to be solved and would also lose the transmit gain / system range which can be achieved by transmitting on multiple channels simultaneously using a modulation scheme such as DDMA. Herein, the DDMA phase encoding is implemented across three time slots (using a form of TDMA) with a maximum of four transmit channels (i.e., the four channels on the radar transceiver chip) transmitting simultaneously at any one time. Further, each transmit channel TX1, TX2, TX3 and TX4 is given a different phase coding according to DDMA, or some other applicable phase modulation method, e.g., BPM.

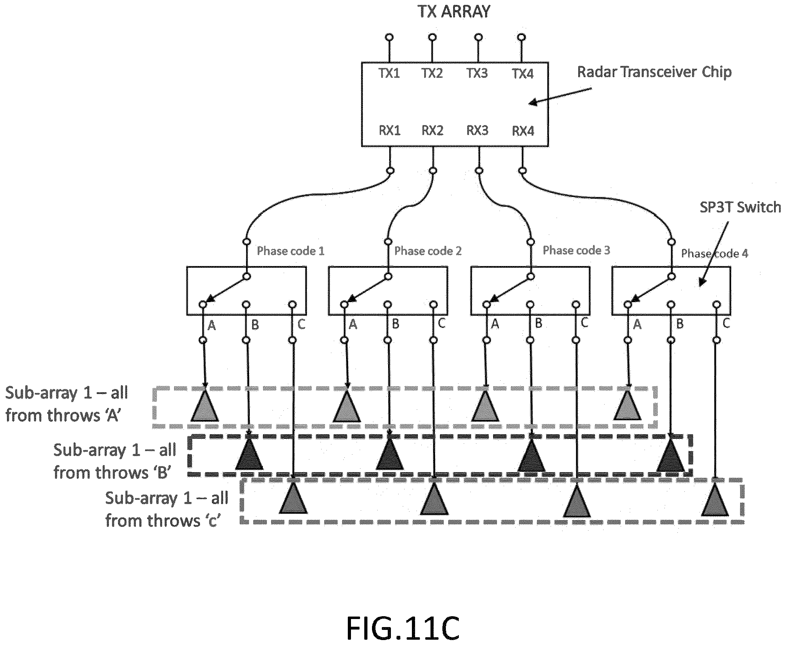

Further, it would be appreciated by those familiar to the field that the SP-TDMA scheme can be implemented at the receiver end. An exemplary MIMO system implemented SP-TDMA scheme at receiving end has been illustrated with reference to FIG.11C.

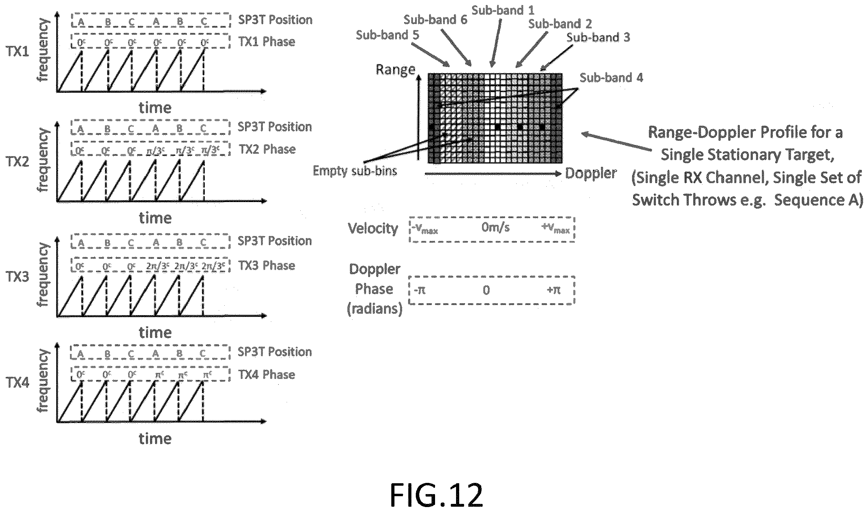

FIG. 12 shows an example of the first 6 chirps of a SP-TDMA transmit modulation scheme using DDMA phase coding in the MIMO radar configuration 1100.

For the MIMO radar configuration 1100, this phase-coding and time slot allocation would follow that shown in FIG. 11. With an $N_{throw}$ switch, the DDMA modulation scheme phase is repeated $N_{throw}$ times before the next phase shift is implemented, and concurrently, the $N_{TX}$ switches are switched through their $N_{throw}$ throw positions, repeating the DDMA modulation across $N_{throw}$ time slots. In this way, a hybrid of DDMA and Time Division Multiple Access is implemented, whereby the DDMA scheme on each set of time slots (i.e., corresponding to each set of $N_{throw}$ switch throws) is demodulated by means of the circular sum approach previously detailed. Alternatively Chinese Remainder Theorem (CRT) or any other appropriate means could be used to recover the velocity and map the Doppler sub-bins to their correct transmit channels of demodulating the signal. By demodulating the DDMA, the data received on each of the $N_{throw}$ sets of time slots can be mapped to the original transmitters, and then by considering which transmit antenna elements are used on which time slots, the full virtual array can be mapped out. While the phase encoding chosen here is analogous to that used in DDMA, it will be recognised that other types of phase encoding could be used without limitation. Likewise, the switch positions shown in FIG.11 are all shown at the same position, and, for ease of explanation, they cycle repeatedly from A to B to C in all cases. However, this does not have to be the case provided that the positions cycled on each switch remains constant.

In the SP-TDMA transmit modulation scheme, the maximum unambiguous velocity is limited to $v_{max}/N_{throw}$ of that of a pure DDMA system that has the same number of transmit channels, however the number of transmit channels is increased by a factor of $N_{throw}$, which, in turn, increases the angular accuracy, gain and range of the radar system proportionately. The DSP methods that could be used to extend the velocity back to $v_{max}$, include, but are not limited to, coherent peak methods, whereby the azimuth and/or elevation angular information is considered, or CRT, whereby sub-frames with different co-prime chirp repetition intervals may be used to recover the true velocity.

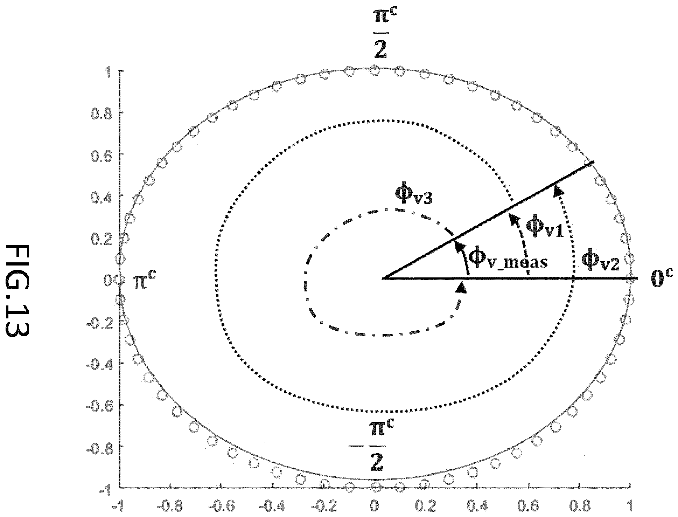

To solve which of the possible detected velocities is correct or 'the real one', the coherent gain method is used in this embodiment. In this example it is assumed that the virtual array is a 'filled' array of elements with uniform separations of d = λ/2 (where λ is the wavelength of the operating frequency), and coherent azimuth FFT processing can be used (however, those familiar in the field will appreciate that azimuth-elevation processing or Chinese Remainder Theorem or an 'unfilled' array with non-uniform element spacings could also be used). For example, and with reference to FIGs. 11 and 12, when using SP3T switches, there are three time slots, and three possible Doppler phase values for the ambiguous phase measurement, for velocities which lie within $\pm v_{max,ext}$, where $v_{max,ext} = v_{max}*N_{throw}$ These phase values are shown graphically in FIG.13 using a phasor diagram, and correspond to the following values:

$$\varphi_{v,unwrapped} \in \{ \varphi_{v1}, \varphi_{v2}, \varphi_{v3} \},$$

where

$$\varphi_{v1} = \varphi_{v,meas}$$

$$\varphi_{v2} = \varphi_{v,meas} + 2\pi$$

$$\varphi_{v3} = \varphi_{v,meas} - 2\pi$$

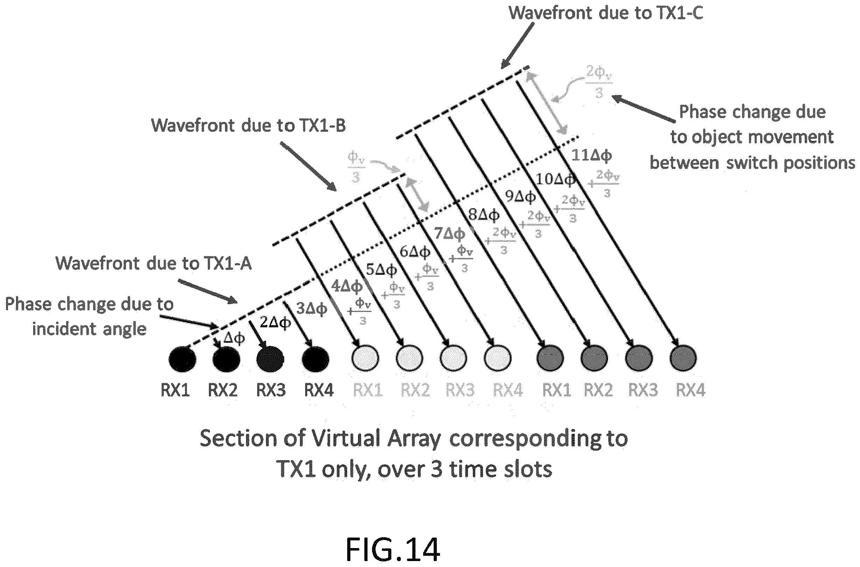

Where $\varphi_{v,meas}$ is the measured Doppler phase, and $\varphi_{v1}$, $\varphi_{v2}$ and $\varphi_{v3}$ are the three possible phase values, with and without phase wrapping. By way of further explanation, the wavefront arriving at a sub-section of the virtual array (corresponding to TX1 only) for the radar system shown in FIG.11 is shown in FIG.14. Here, unless the detected object is at boresight (directly in front of the radar), signal wavefronts will take longer to reach subsequent antenna elements, with the delay proportional to the angle of incidence of the wavefront from boresight $\Theta$. This is represented by the added phase, $\Delta\phi$. If the detected object is moving with a relative velocity to the radar, v, so that when the switch is moved from position A to position B (and again to position C) over subsequent time slots, there will be a further change in the phase, $\Delta\phi_v$, which is proportional to the speed of the object, although switching delay times must be accounted for. In this way, the full virtual array can be formed and by applying the three possible phase "hypothesis" values, $\varphi_{v1}$, $\varphi_{v2}$, $\varphi_{v3}$, across the virtual array, while performing an azimuth FFT for each one, the FFT with the highest peak is assumed to correspond to the true, correct, 'unwrapped' value of $\varphi_v$ since correction with the true phased value will typically give the most coherent FFT peak.

In an embodiment of the present invention, the virtual antenna array configuration may be something other than a simple 'filled' array along the azimuth plane. The filled array with overlapping elements contains elements which would occupy the same positions in the virtual array over subsequent time slots. It facilitates alternative (or complementary) velocity extension method for the time multiplexed receive signals, as phase comparison of the overlapping elements provides unambiguous measurement of the Doppler phase, and also requires less complex processing than coherent peak or CRT methods, enabling faster detection of objects.

In an embodiment of the present invention, there is provided a rectangular virtual array with both azimuth and elevation elements. The angular resolving of object locations is achieved in both azimuth and elevation directions.

In an embodiment of the present invention, there is provided a non-uniform array (for example a sparse array)' which can be either linear, in one plane, or rectangular occurring in both azimuth and elevation planes. A higher angular resolution is obtained for an equivalent chip count as a larger virtual array aperture may be formed.

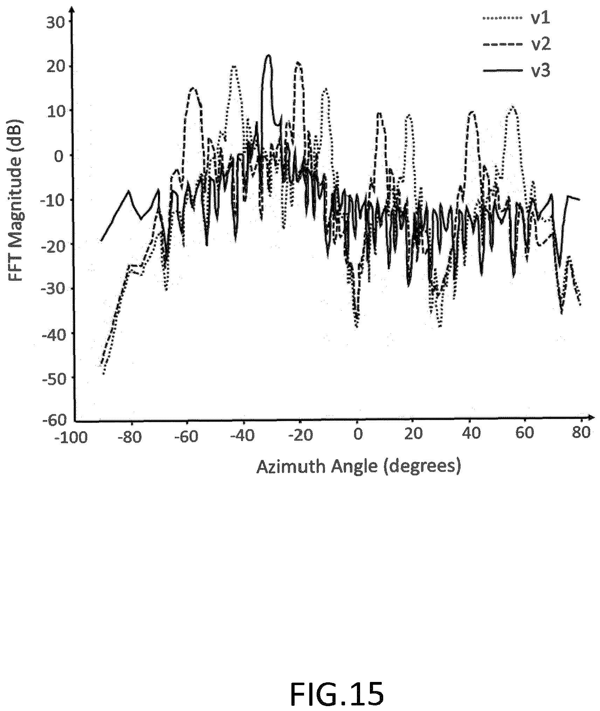

The coherent peak method is further shown in FIG.15, where a radar target at an azimuth angle of -30°, travelling at a velocity, v, where $v < -v_{max}$ is identified. In this case, velocity hypothesis 3, corresponding to a phase wrap of $-2\pi$ radians, produces the highest peak, and the Doppler phase wrap and azimuth angle are both correctly identified. The correct velocity can then be calculated as:

$$v = \frac{\lambda\Delta\varphi_{v,unwrapped}}{4\pi T_c}$$

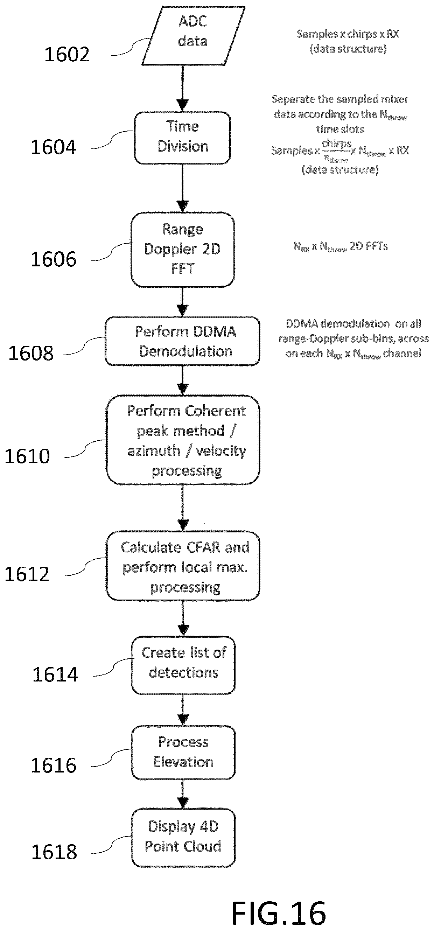

FIG.16 illustrates a DSP chain for demodulating the signals received by a plurality of receive channels of the MIMO radar 1100, in accordance with a first embodiment of the present invention. At step 1602, the ADC data is generated by sampling the IF signal on each receive channel, to produce a three-dimensional data array of size samples per chirp x number of chirps x number of Rx channels. At step 1604, time division is performed by separating the sampled mixer data according to the $N_{throw}$ time slots, resulting in a data structure of

$$Samples\ per\ chirp\ \mathbf{X}\ \frac{chirps}{N_{throw}}\ \mathbf{X}\ N_{throw}\ \mathbf{X}\ RX$$

At step 1606, a range-Doppler 2D FFT is performed along the first two dimensions of the data structure obtained at step 1604. The total number of 2D FFTs performed is $N_{Rx} \times N_{throw}$, and the output is a four-dimensional data array of size samples per chirp x number of chirps/$N_{throw}$ x $N_{throw\ x}$ number of Rx channels. At step 1608, DDMA demodulation is performed on all range-Doppler sub-bins, implemented separately on each of the $N_{Rx} \times N_{throw}$ range-Doppler profiles, to map each range-Doppler sub-bin to its corresponding TX channel and to recover the true ambiguous measured velocity for that range-Doppler sub-bin. At step 1610, coherent peak method/azimuth/velocity processing is performed, using the relevant elements of the virtual array, to recover the true unambiguous extended velocity for each range-Doppler sub-bin. At step 1612, the CFAR is calculated, and local maximum algorithms can also optionally be run, to determine which range-Doppler-azimuth bins contain valid target detections. At step 1614, a list of detections is created. At step 1616, elevation processing is performed on only the range-Doppler bins which are flagged as detections during step 1612. At step 1618, the 4D point cloud (which shows the 3D position along with the velocity for all targets detected in the frame) is calculated and displayed. It is noted here that detections in elevation can also be used for velocity extension, so step 1616 would become azimuth processing in this case. For the case where both azimuth and elevation detections are used for velocity extension, steps 1602 to 1614 would run concurrently on both azimuth and elevation with step 1616 being removed.

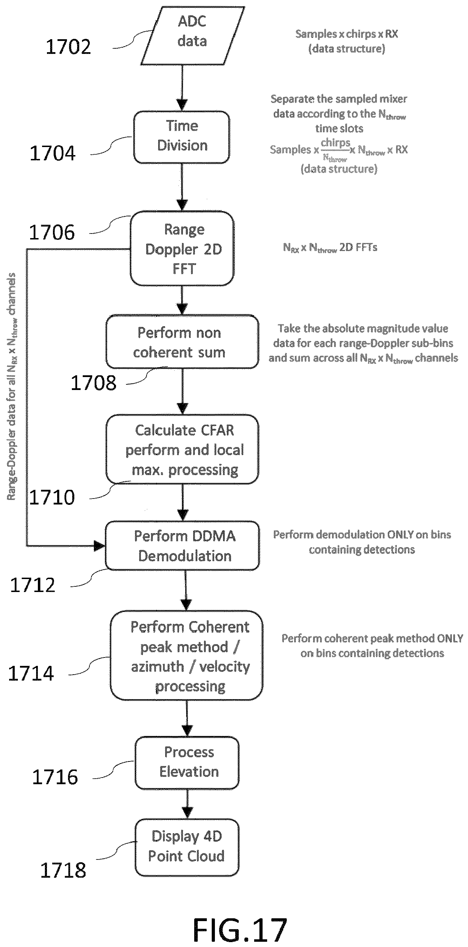

FIG.17 illustrates a DSP chain for demodulating the signals received by a plurality of receive channels of the MIMO radar 1100, in accordance with a second embodiment of the present invention. At step 1702, the ADC data is generated by sampling the IF signal on each receive channel, to produce a three-dimensional data array of size samples per chirp x number of chirps x number of Rx channels. At step 1704, time division is performed by separating the sampled mixer data according to the $N_{throw}$ time slots, resulting in a data structure of

$$Samples\ per\ chirp\ \mathbf{X}\ \frac{chirps}{N_{throw}}\ \mathbf{X}\ N_{throw}\ \mathbf{X}\ RX$$

At step 1706, range-Doppler 2D FFTs are performed along the first two dimensions of the data structure obtained at step 1704. The total number of 2D FFTs performed is $N_{Rx} \times N_{throw}$, and the output is a four-dimensional data array of size samples per chirp x number of chirps/$N_{throw} \times N_{throw\ x}$ number of Rx channels. At step 1708, a non-coherent sum is performed in which the absolute magnitude value data is taken for each range-Doppler sub-bin and summed across all $N_{Rx} \times N_{throw}$ channels to produce a two-dimensional data array of size samples per chirp x number of chirps/$N_{throw}$. At step 1710, the CFAR is calculated using the non-coherently summed data, and local maximum algorithms can also optionally be run to determine which range-Doppler bins contain target detections. At step 1712, DDMA demodulation is performed on only those bins containing detections, to map the range-Doppler sub-bins corresponding to each detection to their corresponding transmit channel, to construct the virtual array. At step 1714, coherent peak method/azimuth/velocity processing is performed using the virtual array for only those range-Doppler bins containing detections. At step 1716, elevation processing is performed. At step 1718, the 4D point cloud (which shows the 3D position along with the velocity for all targets detected in the frame) is calculated and displayed.

In the embodiment of FIG.17, the CFAR calculation is performed earlier in DSP chain and would reduce the processing requirements for demodulation, angular and velocity estimation, and would therefore increase the calculation speed, but at a possible reduction in the overall number of detections made.

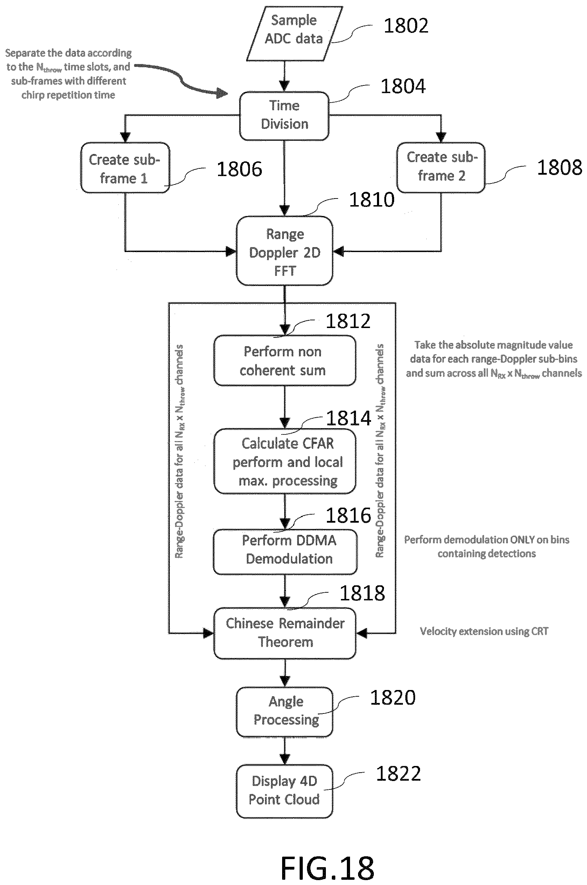

FIG.18 illustrates a DSP chain for demodulating the signals received by a plurality of receive channels of the MIMO radar 1100, in accordance with a third embodiment of the present invention. At step 1802, the ADC data is generated by sampling the IF signal on each receive channel, to produce a three-dimensional data array of size samples per chirp x number of chirps x number of Rx channels. At step 1804, time division is performed by separating the sampled mixer data according to the $N_{throw}$ time slots. At steps 1806 and 1808, the ADC data is divided into sub-frames 1 and 2 which were transmitted with different chirp repetition rates. The output is two four-dimensional data arrays. At step 1810, range-Doppler 2D FFTs are performed along the first two dimensions of the data arrays obtained at steps 1806 and 1808. The total number of 2D FFTs performed is $N_{Rx} \times N_{throw} \times N_{sub\text{-}frame}$, and the output is two (one for each sub-frame) four-dimensional data array of size samples per chirp x number of chirps/$N_{throw} \times$ number of Rx channels $\times$ $N_{throw}$. At step 1812, a non-coherent sum is performed in which the absolute magnitude value data is taken for each range-Doppler sub-bins and summed across all $N_{Rx} \times N_{throw}$ channels, for each sub-frame. At step 1814, the CFAR is calculated, and local maximum algorithms can be run to determine which range-Doppler-angle bins contain target detections. At step 1816, DDMA demodulation is performed on only those bins containing detections. At step 1818, velocity extension is performed using the Chinese Remainder Theorem (CRT) using the two sets of DDMA demodulated data arrays corresponding to sub-frames 1 and 2. At step 1820, angle processing is performed and at step 1822, the 4D point cloud (which shows the 3D position along with the velocity for all targets detected in the frame) is calculated and displayed.

In the embodiment of FIG. 18, sub-frames with different co-prime chirp repetition intervals are implemented to enable the Chinese Remainder Theorem to be used for velocity extension, rather than the coherent peak method.

By using switches, with a pole-to-throw ratio of S and insertion loss of L, to perform SP-TDMA modulation, there are several benefits compared with TDM or DDMA MIMO using the same number and type of transceiver chips but no switches, such as:

- Compared with TDM, the transmit gain is increased by a factor of S/L (assuming that L < S), resulting in improved signal to noise ratio and therefore increased maximum range for the radar. Moreover, the number of elements in the virtual array aperture is increased by a factor of S, leading to further range increase through increased array gain, and improved angular resolution due to larger array aperture size.
- Compared with a DDMA MIMO, the transmit EIRP is lowered by a factor of 1/L, but the virtual array aperture size is increased by a factor of S, leading to increased array gain and improved angular resolution. In this case, the range may still therefore be increased provided that S > L, to provide increased array gain which is greater than the increased transmitter loss.

Moreover, by using switches in a MIMO radar to perform SP-TDMA modulation, compared with the same MIMO radar, using the switches to perform purely TDM modulation, the SP-TDMA MIMO system has increased EIRP due to transmitting on multiple channels simultaneously, resulting in increased range. In addition, the native unambiguous maximum velocity is higher for the SP-TDMA system due to using fewer transmit time slots, and there are therefore fewer velocity hypotheses to be solved to extend the maximum velocity beyond this, resulting in less complex and more time-efficient DSP methods.

It is noted that, although switches are used in the earlier description, the invention is not limited to a system using switches. This configuration is only used here to increase the number of MIMO channels without increasing the radar transceiver chip count. The technique could alternatively be applied to a system using multiple radar transceiver chips (in a master-slave configuration) to increase the number of MIMO channels, rather than switches. Assuming the same type of radar transceiver chips, this could be used to increase the range of the radar system compared to the switched SP-TDMA system, by a combination of; removing the switching loss; increasing the number of transceiver channels simultaneously transmitting, to achieve higher transmit EIRP; and increasing the number of transceiver receive channels, to provide a larger virtual array for higher system gain. This latter feature would also have the benefit of increasing the resolution of the radar. This technique with multiple transceivers would provide the following benefits compared with either a TDM or DDMA system (using the same radar transceiver chips), such as:

- Compared with TDM, range is increased due to the increase in coherent gain from transmitting simultaneously on multiple channels. The native unambiguous maximum velocity is also higher due to transmitting on multiple channels simultaneously, leading to shorter chirp repetition times on the same virtual array transmit channels, leading to a less processing intensive velocity extension process, e.g., fewer hypotheses to solve if using the coherent peak method, which may also therefore be more robust in situations with low SNR or multipath.
- Compared with DDMA, there is slightly lower range due to transmitting on fewer channels simultaneously. However, in the SP-TDMA system described there are fewer sub-bands when compared to a DDMA system which means that there is reduced probability of multiple targets appearing in the same sub-bins of different sets of sub-bands and that the risk of one or more targets being obscured and therefore not detected is reduced. Also, in DDMA, phase step is finer because of increased channels transmitting simultaneously, meaning phase coding through chirps is more sensitive to chip precision capability of phase code generation. The current invention therefore increases the probability of detecting all targets within the radar field of view. This feature is especially useful for systems with large numbers of TX channels, as this results in an increase in the number of sub-bands in a DDMA system. Thus, for a DDMA system with $N_{TX} = 12$, a requirement of 16 sub-bands is needed (assuming that $N_{sub} = z*2^x$, where z is an integer number, typically but not exclusively, 1 or 3) which would increase the probability of missing these detections. Using the SP-TDMA modulation scheme, however, only 5 sub-bands are needed (including one empty sub-band for demodulating), using 3 time slots, and thereby the risk of one or more targets being obscured is reduced. In an embodiment of the present invention, the CRT method can be used for demodulation rather than the described Empty Sub-band based DDMA technique and the coherent peak method to find the correct velocity.

It is noted that whilst in the SP-TDMA embodiment using switches in the earlier description, the switches are placed between the transmit channels of the radar transceiver chip and the transmit antenna elements, switches could instead be placed between the receive antenna elements and the receive channels of the radar transceiver chip to achieve the same outcome of increasing the number of transceiver channels in the MIMO beyond the number available from the transceiver alone. In this case, the number of transmit antennas would be equal to the number of transmit channels on the radar transceiver chip, and phase modulation would be performed on the transmitted signals as with the earlier example, but the number of receive antennas would be increased from $N_{RX}$ to $N_{throw}*N_{RX}$, and the switching would be performed on the receive antennas. This would increase the virtual array size of the MIMO, leading to increased performance in terms of system range and angular resolution, as described for the previous switched examples. Otherwise, the DSP chain would be the same for either embodiment, with the received data still being separated according to time slots, prior to the phase code demodulation, CFAR detection and angular processing steps.

It is possible to extend the number of SP-TDMA MIMO transceiver channels even further, without increasing the number of radar transceiver chips, by placing switches between the radar transceiver transmit channels and transmit antennas, and between the receive antennas and radar transceiver receive channels. In this case, the transmit phase modulation and switching schemes would have to increase from $N_{throw}$ time slots to $N_{throw}^2$ time slots (assuming the same number of switch throws on the transmit and receive sides), but otherwise, the DSP chain would be the same, with the received data still being separated according to time slots, prior to the phase code demodulation, CFAR detection and angular processing steps. This method would decrease the native maximum unambiguous velocity of the radar when compared with switching only on transmit or receive but would increase the angular resolution and range.

In the specification the terms "comprise, comprises, comprised and comprising" or any variation thereof and the terms include, includes, included and including" or any variation thereof are considered to be interchangeable, and they should all be afforded the widest possible interpretation and vice versa.

The invention is not limited to the embodiments hereinbefore described but may be varied in both construction and detail.

## Claims

1. A millimetre wave digital automotive radar, comprising:

   a plurality of millimetre wave transmitters, that are configured to transmit phase coded signals simultaneously according to a phase modulation scheme; and
   a plurality of antenna sub-arrays operably coupled to a plurality of millimetre wave transmitters, wherein each antenna sub-array includes a number of antenna elements identical to a number of millimetre wave transmitters, and wherein each antenna sub-array is configured to transmit phase coded signals received from respective millimetre wave transmitters on separate, mutually orthogonal time slots from the other antenna sub-arrays, using time division multiplexing; and
   a plurality of millimetre wave receivers coupled to antennas, wherein, the millimetre wave receivers receive the reflected phase coded signal from objects at a distance from the radar according to the TDMA modulation scheme.

2. The millimetre wave automotive radar as claimed in claim 1, wherein the plurality of antenna sub-arrays transmit phase coded signals received from respective millimetre wave transmitters through at least one transmitter element during each orthogonal time slot, such that the antenna elements of the plurality of sub-arrays that transmit simultaneously during a first instance of time continue to transmit simultaneously over different subsequent instances of time using different slow phase codes according to a pre-defined scheme.

3. The millimetre wave automotive radar as claimed in any preceding claim, wherein the plurality of millimetre wave transmitters is implemented through a plurality of transmit channels of at least one transceiver chip.

4. The millimetre wave automotive radar as claimed in any preceding claim, wherein the plurality of antenna sub-arrays is connected to the plurality of millimetre wave transmitters through respective plurality of single input multi-output millimetre-wave switches, and wherein an input of each switch is connected to a respective millimetre wave transmitter, and a plurality of outputs of each switch are connected to antennas of different antenna sub-arrays.

5. The millimetre wave automotive radar as claimed in any preceding claim, wherein a number of antenna sub-arrays is identical to the number of outputs of each switch and a number of antenna elements in each sub-array is identical to a number of millimetre wave transmitters.

6. The millimetre wave automotive radar as claimed in any preceding claim, wherein when the number of switches is four and number of throw positions in each switch is three, then first throw positions of each switch are connected to respective antennas of first sub-array, second throw positions of each switch are connected to respective antennas of second sub-array and third throw positions of each switch are connected to respective antennas of the third sub-array, and wherein identical throw positions of each switch are activated simultaneously to enable simultaneous transmission from antennas of respective antenna sub-array.

7. The millimetre wave automotive radar as claimed in any preceding claim, wherein the throw positions of each switch are activated in a predefined common sequence to enable transmission of phase coded signals from respective transmitter on mutually orthogonal time slots according to the TDMA modulation scheme.

8. The millimetre wave automotive radar as claimed in any preceding claim, wherein the antenna elements of either the millimetre wave transmitter, or millimetre wave receiver, or both are arranged with non-equal spacings.

9. The millimetre wave automotive radar as claimed in any preceding claim, wherein the phase modulation is selected from one of: DDMA and BPM.

10. The millimetre wave automotive radar as claimed in any preceding claim further comprising:
a plurality of millimetre wave transceivers for receiving and demodulating the phase coded signals transmitted by the plurality of millimetre wave transmitters based on a circular sum approach to identify a millimetre wave transmitter of each received signal, and then identifying a transmit antenna element of said millimetre wave transmitter based on a time of arrival of the demodulated signal.

11. The millimetre wave automotive radar as claimed in any preceding claim further comprising another plurality of antenna sub-arrays coupled to respective plurality of millimetre wave receivers that receive uncoded, reflected signals and are configured to apply phase codes to these received signals simultaneously according to a phase modulation scheme, wherein the phase codes are on separate, mutually orthogonal time slots from the other sub-arrays, using time division multiplexing, and wherein the number of millimetre wave receivers is identical to the number of antenna elements in each antenna sub-array.

12. A method of operating a millimetre wave automotive radar, comprising:

enabling a plurality of millimetre wave transmitters to transmit phase coded signals simultaneously according to a phase modulation scheme;
operably coupling a plurality of sub-arrays to respective plurality of millimetre wave transmitters, wherein each sub-array includes a predefined number of transmitter elements; and
enabling the transmitter elements of each sub-array to transmit a phase coded signal received from respective millimetre wave transmitters on separate, mutually orthogonal time slots from the other sub-arrays, using time division multiplexing.

FIG.1

FIG.2

FIG.3

FIG.4

Transmitted sequence of chirps

Range-Doppler Profile for a
Single Stationary Target

Range

Doppler

Velocity  -v_max    0m/s    +v_max

Doppler
Phase    -π       0       +π
(radians)

Transmitted sequence of chirps

Range-Doppler Profile for a
Single Target Travelling at v_max

Range

Doppler

Velocity  -v_max    0m/s    +v_max

Doppler
Phase    -π       0       +π
(radians)

Transmitted sequence of chirps

Range-Doppler Profile for a
Single Target Travelling at > v_max

Range

Doppler

Velocity  -v_max    0m/s    +v_max

Doppler
Phase    -π       0       +π
(radians)

# FIG.5

FIG.6

TX1 frequency

0° 0°
0° 0°
0° 0°

time

0°

TX2 frequency

0° 2π/3ᶜ
4π/3ᶜ

2π(K-1)/3ᶜ

time

TX3 frequency

0° -2π/3ᶜ
-4π/3ᶜ

-2π(K-1)/3ᶜ

time

# FIG.7

Range

Sub-band 3
Sub-band 1
Sub-band 2

Doppler

Range-Doppler Profile for a Single Stationary Target

| Velocity | Doppler Phase (radians) |
|---|---|
| -V_max | -π |
| 0m/s | 0 |
| +V_max | +π |

FIG.8

Sample
ADC data

↓

Calculate
2D FFT
(range-
Doppler)

↓

Demodulate
DDMA
→ Doppler sub-band values

↓

Calculate
Azimuth FFT

↓

| Calculate Doppler CFAR | Calculate Doppler Azimuth Local Max | Calculate Range CFAR |

→ Combine ←

↓

Process
Elevation

↓

Identify
Correct
Velocity

↓

Display 4D
Point Cloud

# FIG.9

**SP-TDMA**

TDMA

DDMA

1000

# FIG.10

TX ARRAY

FIG.11A

EP 4 390 454 A1

Sub-array 1 – all from throws 'c'

Sub-array 1 – all from throws 'B'

Sub-array 1 – all from throws 'A'

1106b

1106c

1106a

A  B  C    A  B  C    A  B  C    A  B  C

1104a    1104b    1104c    1104d

SP3T Switch

TX1  TX2  TX3  TX4

RX1  RX2  RX3  RX4

Radar Transceiver Chip

1100

RX ARRAY

FIG.11B

TX ARRAY

Radar Transceiver Chip

| TX1 | TX2 | TX3 | TX4 |
| RX1 | RX2 | RX3 | RX4 |

SP3T Switch

Phase code 1  Phase code 2  Phase code 3  Phase code 4

A  B  C   A  B  C   A  B  C   A  B  C

Sub-array 1 – all from throws 'A'

Sub-array 1 – all from throws 'B'

Sub-array 1 – all from throws 'c'

FIG.11C

# FIG.12

Range-Doppler Profile for a Single Stationary Target, (Single RX Channel, Single Set of Switch Throws e.g. Sequence A)

Sub-band 4
Sub-band 3
Sub-band 2
Sub-band 1
Sub-band 6
Sub-band 5

Empty sub-bins

| Velocity | $-V_{max}$ | 0m/s | $+V_{max}$ |
|---|---|---|---|

| Doppler Phase (radians) | $-\pi$ | 0 | $+\pi$ |
|---|---|---|---|

EP 4 390 454 A1

FIG.13

# FIG.14

Section of Virtual Array corresponding to
TX1 only, over 3 time slots

RX1 RX2 RX3 RX4 RX1 RX2 RX3 RX4 RX1 RX2 RX3 RX4

Phase change due to
incident angle

$\Delta\phi$

$2\Delta\phi$

Wavefront due to TX1-A

$3\Delta\phi$

$4\Delta\phi + \frac{\Delta\phi_V}{3}$

$5\Delta\phi + \frac{\Delta\phi_V}{3}$

$6\Delta\phi + \frac{\Delta\phi_V}{3}$

$\frac{\Delta\phi_V}{3}$

Wavefront due to TX1-B

$7\Delta\phi + \frac{\Delta\phi_V}{3}$

$8\Delta\phi + 2\frac{\Delta\phi_V}{3}$

$9\Delta\phi + 2\frac{\Delta\phi_V}{3}$

$10\Delta\phi + 2\frac{\Delta\phi_V}{3}$

$11\Delta\phi + 2\frac{\Delta\phi_V}{3}$

Phase change due
to object movement
between switch positions

$2\frac{\Delta\phi_V}{3}$

Wavefront due to TX1-C

EP 4 390 454 A1

FIG.15

FIG.16

| | | |
|---|---|---|
| 1702 | ADC data | Samples x chirps x RX (data structure) |
| 1704 | Time Division | Separate the sampled mixer data according to the $N_{throw}$ time slots $Samples \times \frac{chirps}{N_{throw}} \times N_{throw} \times RX$ (data structure) |
| 1706 | Range Doppler 2D FFT | $N_{RX} \times N_{throw}$ 2D FFTs |
| 1708 | Perform non coherent sum | Take the absolute magnitude value data for each range-Doppler sub-bins and sum across all $N_{RX} \times N_{throw}$ channels |
| 1710 | Calculate CFAR perform and local max. processing | |
| 1712 | Perform DDMA Demodulation | Perform demodulation ONLY on bins containing detections |
| 1714 | Perform Coherent peak method / azimuth / velocity processing | Perform coherent peak method ONLY on bins containing detections |
| 1716 | Process Elevation | |
| 1718 | Display 4D Point Cloud | |

Range-Doppler data for all $N_{RX} \times N_{throw}$ channels

FIG.17

Sample ADC data — 1802

Separate the data according to the $N_{throw}$ time slots, and sub-frames with different chirp repetition time

Time Division — 1804

Create sub-frame 1 — 1806

Create sub-frame 2 — 1808

Range Doppler 2D FFT — 1810

Range-Doppler data for all $N_{RX}$ x $N_{throw}$ channels

Perform non coherent sum — 1812

Take the absolute magnitude value data for each range-Doppler sub-bins and sum across all $N_{RX}$ x $N_{throw}$ channels

Calculate CFAR perform and local max. processing — 1814

Range-Doppler data for all $N_{RX}$ x $N_{throw}$ channels

Perform DDMA Demodulation — 1816

Perform demodulation ONLY on bins containing detections

Chinese Remainder Theorem — 1818

Velocity extension using CRT

Angle Processing — 1820

Display 4D Point Cloud — 1822

FIG.18

Europäisches
Patentamt

European
Patent Office

Office européen
des brevets

# EUROPEAN SEARCH REPORT

Application Number

EP 22 21 4760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/239791 A1 (VOLLBRACHT DENNIS [DE] ET AL) 5 August 2021 (2021-08-05) * abstract; figures 1, 4 * * paragraphs [0002], [0022], [0038], [0128], [0132], [0134] * * paragraphs [0139], [0154] – [0157], [0161], [0162] * ----- | 1-12 | INV. G01S13/34 G01S7/35 G01S7/41 G01S13/42 G01S13/931 |
| X | US 2022/107402 A1 (KISHIGAMI TAKAAKI [JP]) 7 April 2022 (2022-04-07) * figures 5, 6, 11, 12 * * paragraphs [0002], [0053], [0062] – [0064], [0315], [0316], [0320] * * paragraphs [0349] – [0366], [0369], [0378], [0387], [0390], [0392], [0460] * ----- | 1-12 | |

TECHNICAL FIELDS
SEARCHED      (IPC)

G01S

The present search report has been drawn up for all claims

| Place of search | Date of completion of the search | Examiner |
|---|---|---|
| Munich | 22 May 2023 | Rodríguez González |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 4760

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2023

| Patent document cited in search report | Publication date | Patent family member(s) | Publication date |
|---|---|---|---|
| US 2021239791 A1 | 05-08-2021 | CN 113281752 A | 20-08-2021 |
| | | EP 3862771 A1 | 11-08-2021 |
| | | US 2021239791 A1 | 05-08-2021 |
| US 2022107402 A1 | 07-04-2022 | CN 114026455 A | 08-02-2022 |
| | | DE 112020002970 T5 | 10-03-2022 |
| | | JP 2020148754 A | 17-09-2020 |
| | | US 2022107402 A1 | 07-04-2022 |
| | | WO 2020255857 A1 | 24-12-2020 |

EPO FORM P0459

For more details about this annex : see Official Journal of the European Patent Office, No. 12/82